**Europäisches Patentamt**

**European Patent Office**

**Office européen des brevets**

(19)

(11) Veröffentlichungsnummer: **0 062 080**
**B1**

(12) **EUROPÄISCHE PATENTSCHRIFT**

(45) Veröffentlichungstag der Patentschrift:
**07.03.84**

(51) Int. Cl.³: **B 01 D 33/04,** B 65 G 15/34

(21) Anmeldenummer: **81102489.2**

(22) Anmeldetag: **02.04.81**

(54) **Förderband für Vakuumfilter.**

(43) Veröffentlichungstag der Anmeldung:
**13.10.82 Patentblatt 82/41**

(45) Bekanntmachung des Hinweises auf die Patenterteilung:
**07.03.84 Patentblatt 84/10**

(84) Benannte Vertragsstaaten:
**AT BE CH DE FR GB IT LI NL SE**

(56) Entgegenhaltungen:
**DE - U - 7 514 028**
**DE - U - 8 021 771**

(73) Patentinhaber: **Clouth Gummiwerke AG, Niehler Strasse 92 - 116, D-5000 Köln 60 (DE)**

(72) Erfinder: **Spaar, Hermann, Drosselweg 31, D-5000 Köln 60 (DE)**

(74) Vertreter: **Happe, Otto, Dipl.-Ing., Isselburger Strasse 12, D-5000 Köln 60 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Förderband für Vakuumfilter

Die Erfindung betrifft ein durch zugfeste Gewebeeinlagen verstärktes endloses Förderband für Vakuumfilter, das in seinem mittleren Bereich mit mindestens einer längsverlaufenden Lochreihe versehen ist, wobei sich die Gewebeeinlagen nicht über den mittleren Bereich des Förderbandes – in dem sich die Lochreihen befinden – erstrecken (DE-U-8.021.771).

Bei Fördergurten der vorgenannten Art ist der mittlere Bereich einer besonders hohen Beanspruchung ausgesetzt, weil durch den unter dem Förderband gebildeten Vakuum bedingten Sog und die fehlende Unterstützung an dieser Stelle das Förderband zur Durchbiegung neigt und dadurch ungleichmässig abgenutzt wird. Versuche, den unter dem Förderband verlaufenden Vakuumkanal oder den mittleren Bereich des Förderbandes so abzuändern, dass ein geringerer Verschleiss auftritt, haben bisher nicht zum Erfolg geführt.

Der Erfindung liegt die Aufgabe zugrunde, ein Förderband der eingangs genannten Art so auszubilden, dass sich die zwischen dem Förderband und dem Vakuumkanal auftretende Reibung gleichmässig auf möglichst grosse Flächen verteilt, so dass der Verschleiss des Förderbandes wesentlich verringert wird.

Die Lösung der gestellten Aufgabe besteht darin, dass in das Förderband in Abstand voneinander angeordnete biegungssteife Quereinlagen eingebettet sind, die sich über den mittleren Bereich des Förderbandes erstrecken und deren Länge mindestens das Dreifache der Breite des mittleren, gewebefreien Bereichs des Förderbandes beträgt. Die biegungssteifen Quereinlagen verhindern ein Durchbiegen des Förderbandes, so dass das Förderband stets plan auf dem Vakuumkanal aufliegt.

Zweckmässigerweise beträgt die Länge der Quereinlagen etwa das Sechsfache der Breite des mittleren, gewebefreien Bereichs des Förderbandes.

Bei einer bevorzugten Ausführungsform der Erfindung sind die Quereinlagen aus monofilen vollsynthetischen Fäden gebildet, die nach einem weiteren Merkmal der Erfindung einen Durchmesser von 1 bis 3 mm aufweisen.

In Weiterbildung der Erfindung sind die Quereinlagen zwischen der das Fördergut tragenden Deckplatte und der Gewebeeinlage des Förderbandes angeordnet oder sie bilden zwei Ebenen, von denen eine oberhalb und eine unterhalb der Gewebeeinlage angeordnet ist.

Eine besonders gute Steifigkeit des Förderbandes in seinem mittleren Bereich wird dadurch herbeigeführt, dass der Abstand der Quereinlagen von der Gewebeeinlage etwa 2 mm oder der Abstand der beiden Ebenen von Quereinlagen voneinander mindestens 8 mm beträgt.

In der Zeichnung ist ein erfindungsgemässes Förderband beispielsweise dargestellt. Es zeigen:

Fig. 1 ein Förderband im Querschnitt und
Fig. 2 einen Abschnitt des Förderbandes gemäss Fig. 1 in Draufsicht.

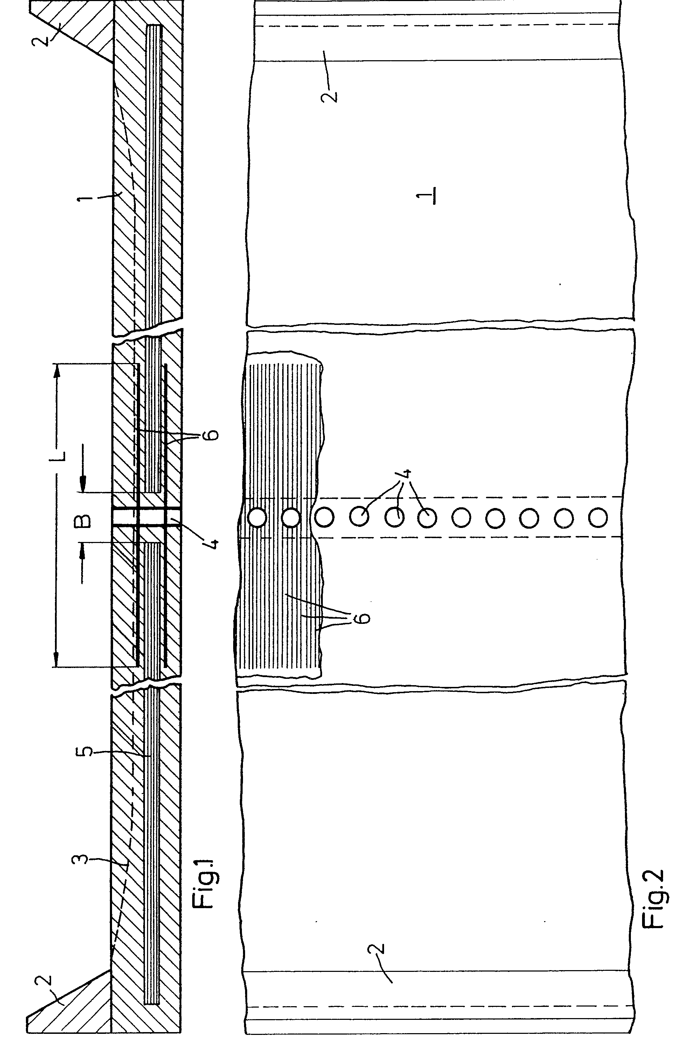

Das Förderband 1 ist mit seitlichen Randprofilen 2 versehen, die ein Herabfallen des Fördergutes von dem Förderband 1 verhindern, und weist in Querrichtung verlaufende Nuten 3 auf, die zur Ableitung des Filtrates zur Mitte des Förderbandes 1 dienen (in Fig. 2 sind die Nuten 3 nicht eingezeichnet). In der Mitte des Förderbandes 1 in dessen Längsrichtung nebeneinander angeordnete, eine Lochreihe 4 bildende Bohrungen gestatten ein Absaugen des Filtrates durch das Förderband 1 hindurch. In das Förderband 1 ist eine zugfeste Gewebeeinlage 5 eingebettet. Der mittlere Bereich des Förderbandes 1 ist jedoch in einer Breite B gewebefrei. Im mittleren Bereich des Förderbandes 1 sind in Abstand voneinander angeordnete Quereinlagen 6 mit der Länge L eingebettet. Bei dem dargestellten Ausführungsbeispiel sind die Quereinlagen 6 in zwei Ebenen angeordnet, von denen eine oberhalb und eine unterhalb der Gewebeeinlage 5 verläuft.

**Patentansprüche**

1. Durch zugfeste Gewebeeinlagen verstärktes endloses Förderband für Vakuumfilter, das in seinem mittleren Bereich mit mindestens einer längsverlaufenden Lochreihe versehen ist, wobei sich die Gewebeeinlagen (5) nicht über den mittleren Bereich des Förderbandes (1) – in dem sich die Lochreihen (4) befinden – erstrecken, dadurch gekennzeichnet, dass in das Förderband (1) in Abstand voneinander angeordnete biegungssteife Quereinlagen (6) eingebettet sind, die sich über den mittleren Bereich des Förderbandes (1) erstrecken und deren Länge (L) mindestens das Dreifache der Breite (B) des mittleren, gewebefreien Bereiches des Förderbandes (1) beträgt.

2. Förderband nach Anspruch 1, dadurch gekennzeichnet, dass die Länge (L) der Quereinlagen (6) etwa das Sechsfache der Breite (B) des mittleren, gewebefreien Bereiches des Förderbandes (1) beträgt.

3. Förderband nach Anspruch 1 oder 2, dadurch gekennzeichnet, dass die Quereinlagen (6) aus monofilen vollsynthetischen Fäden gebildet sind.

4. Förderband nach Anspruch 3, dadurch gekennzeichnet, dass die monifilen Fäden einen Durchmesser von 1 bis 3 mm aufweisen.

5. Förderband nach einem der Ansprüche 1 bis 4, dadurch gekennzeichnet, dass die Quereinlagen (6), zwischen der das Fördergut tragenden Deckplatte an der Gewebeeinlage (5) des Förderbandes (1) angeordnet sind.

6. Förderband nach einem der Ansprüche 1 bis 4, dadurch gekennzeichnet, dass die Quereinlagen (6) zwei Ebenen bilden, von denen eine oberhalb und eine unterhalb der Gewebeeinlage (5) angeordnet ist.

7. Förderband nach Anspruch 5 oder 6, dadurch gekennzeichnet, dass der Abstand der Quereinlagen (6) von der Gewebeeinlage (5) etwa 2 mm beträgt.

8. Förderband nach Anspruch 6, dadurch gekennzeichnet, dass der Abstand der beiden Ebenen von Quereinlagen (6) voneinander mindestens 8 mm beträgt.

## Claims

1. Endless conveyor belt for vacuum filters, which is re-inforced by tension resistant fabric inserts and provided in its middle region with at least one longitudinally extending row of holes, wherein the fabric inserts (5) do not extend over the middle region of the conveyor belt (1), in which the hole rows (1) are disposed, characterised thereby, that transverse inserts (6), which are resistant to bending, are arranged at a spacing one from the other and extend over the middle region of the conveyor belt (1) and the length (L) of which amounts to at least three times the width (B) of the middle, fabric-free region of the conveyor belt (1), are embedded into the conveyor belt (1).

2. Conveyor belt according to claim 1, characterised thereby, that the length (L) of the transverse inserts (6) amounts to about six times the width (B) of the middle, fabric-free region of the conveyor belt (1).

3. Conveyor belt according to claim 1 or 2, characterised thereby, that the transverse inserts (6) are formed of monofilamentary, fully synthetic threads.

4. Conveyor belt according to claim 3, characterised thereby, that the monofilamentary threads display a diameter of 1 to 3 millimeters.

5. Conveyor belt according to one of the claims 1 to 4, characterised thereby, that the transverse inserts (6) are arranged between the cover plate carrying the conveyed stock and the fabric insert (5) of the conveyor belt (1).

6. Conveyor belt according to one of the claims 1 to 4, characterised thereby, that the transverse inserts (6) form two planes, of which one is arranged above and one below the fabric insert (5).

7. Conveyor belt according to claim 5 or 6, characterised thereby, that the spacing of the transverse inserts (6) from the fabric insert (5) amounts to about 2 millimetres.

8. Conveyor belt according to claim 6, characterised thereby, that the spacing of both the planes of transverse inserts (6) each from the other amounts to at least 8 millimetres.

## Revendications

1. Bande transporteuse sans fin renforcée par des couches de tissu résistant à la traction pour filtres à vide, cette bande comportant, dans sa zone centrale, au moins une rangée de trous s'étendant dans le sens longitudinal, les couches de tissu (5) ne s'étendant pas sur la zone centrale de la bande transporteuse (1) dans laquelle se trouvent les rangées de trous (4), caractérisée en ce que, dans la bande transporteuse (1), sont enrobées des couches transversales (6) résistant à la flexion, disposées à l'écart l'une de l'autre et s'étendant sur la zone centrale de la bande transporteuse (1), la longueur (L) de ces couches transversales étant égale au moins au triple de la largeur (B) de la zone centrale de la bande transporteuse (1) qui est exempte de tissu.

2. Bande transporteuse suivant la revendication 1, caractérisée en ce que la longueur (L) des couches transversales (6) est égale à peu près au sextuple de la largeur (B) de la zone centrale de la bande transporteuse (1) qui est exempte de tissu.

3. Bande transporteuse suivant la revendication 1 ou 2, caractérisée en ce que les couches transversales (6) sont formées de fils à monofilaments entièrement synthétiques.

4. Bande transporteuse suivant la revendication 3, caractérisée en ce que les fils à monofilaments ont un diamètre de 1 à 3 mm.

5. Bande transporteuse suivant une des revendications 1 à 4, caractérisée en ce que les couches transversales (6) sont disposées entre la plaque de recouvrement supportant le produit transporté et la couche de tissu (5) de la bande transporteuse (1).

6. Bande transporteuse suivant une des revendications 1 à 4, caractérisée en ce que les couches transversales (6) forment deux plans dont un est situé au-dessus de la couche de tissu (5) et dont l'autre est situé en dessous de celle-ci.

7. Bande transporteuse suivant la revendication 5 ou 6, caractérisée en ce que l'écartement entre les couches transversales (6) et la couche de tissu (5) est d'environ 2 mm.

8. Bande transporteuse suivant la revendication 6, caractérisée en ce que l'écartement entre les deux plans de couches transversales (6) est d'au moins 8 mm.

0 062 080

Fig.1

Fig.2